# EUROPEAN PATENT APPLICATION

(11) **EP 1 467 083 A1**
(43) Date of publication of application: **13.10.2004**
(21) Application number: 01982868.0
(22) Date of filing: 20.11.2001
(51) Int. Cl.: F02M 37/10, F02M 37/00, B62J 35/00, B60K 15/03

(54) **FUEL SUPPLY SYSTEM FOR VEHICLE**

(71) Applicant: MITSUBISHI DENKI KABUSHIKI KAISHA, Tokyo 100-8310 (JP)
(72) Inventor: Mitsudou, Hideo, c/o Mitsubishi Denki KK, Chiyoda-ku, Tokyo 100-8310 (JP)
(74) Representative: HOFFMANN - EITLE
(86) International application number: PCT/JP2001/010135
(87) International publication number: WO 2003/044357

(57) **Abstract**

The invention provides a fuel supply system mounted from an opening provided at a bottom of a fuel tank into a tank, and in which diameter of the opening of the tank can be reduced, and fuel pump, fuel filter and others can be firmly secured thereby achieving a fuel supply system resistant to vibration. A recessed cup portion 13b having a smaller diameter than an opening 2 is provided on a base seat 13, which closes the opening 2 at the bottom of a fuel tank 1. A plurality of support stays 14 is fixed to a wall 13c erected from the cup portion 13b. A fuel pump 5 is combined with a fuel filter 7 for filtering a fuel liquid fed from the fuel pump 5, and a suction port side of the fuel pump 5 is positioned at the bottom of the cup portion 13b and fixed to the plurality of support stays 14. The cup portion 13b is arranged to be eccentric from a position D conforming to an outer circumference of the opening of the fuel tank 1, and a feed terminal 11 is provided on a plane of the eccentric space formed between the cup portion 13b and the position D conforming to the outer circumference.

## Description

### Technical Field

The present invention relates to a fuel supply system for vehicle, which is mounted from the bottom of a fuel tank of a motorcycle onto inside thereof and feeds a fuel to an internal combustion engine.

### Background Art

A fuel supply system for a motorcycle is mounted from the bottom of a fuel tank onto inside thereof due to limitation in space for mounting a fuel tank on a body. It is therefore required that an opening diameter at the bottom of the fuel tank, on which such a fuel supply system is mounted, is as small as possible.

Hitherto, a fuel supply system for a vehicle'mounted from the bottom of a fuel tank onto inside thereof is known as shown in Fig. 3 of the Japanese Patent Publication (unexamined) No.72074/2000.

In the drawing, reference numeral 1 designates a fuel tank, numeral 2 designates an opening at the bottom of the fuel tank, and numeral 3 designates a base seat having a flange 3a for closing the opening 2. Numeral 4 designates a stand erected from the bottom of the base seat 3, and numeral 5 designates a motor-driven fuel pump fixed onto the stand 4 with a tightening belt. The fuel pump 5 is positioned on a support member 4a provided on the stand 4 via a shock-absorbing member 4b. Numeral 6 designates a suction filter mounted on the suction port of the fuel pump 5, numeral 7 designates a fuel filter, and numeral 8 designates a fuel supply pipe for supplying a fuel from the fuel supply system to the internal combustion engine. Numeral 9 designates a rubber conduit for connecting an outlet of the fuel pump 5 to an inlet of the fuel filter 7 and an outlet of the fuel filter 7 to the fuel supply pipe 8, respectively. Numeral 10 designates a return pipe for returning an excess fuel in the internal combustion engine to the tank, and numeral 11 designates a power supply terminal for feeding an electric power from outside to the fuel pump 5. Numeral 12 designates a lead wire from the power supply terminal 11 to the fuel pump 5.

In the mentioned conventional fuel supply system, the fuel pump 5 is driven with an electric power supplied from the power supply terminal 11. The fuel pump 5 pressurizes a liquid fuel taken from the fuel suction filter 6, and the fuel filter 7 removes dust contained in the liquid fuel. Then, the liquid fuel is supplied to the internal combustion engine via the fuel supply pipe 8.

In the conventional fuel supply system of above construction, the fuel supply pipe 8, the return pipe 10 and the power supply terminal 11 were disposed at the bottom of the base seat 3. Further, the stand 4 supporting the fuel pump 5 and others is welded on the bottom face of the base seat 3. Therefore, bottom face of the base seat 3 essentially occupies a large area, and outer diameter of the flange 3a on the base seat 3 is also large. As a result, diameter of the opening in the fuel tank 1 is large.

Moreover, the stand 4 was mounted on the bottom of the base seat 3 in the form of a cantilever structure. The portions supporting the fuel pump 5, the fuel filter 7 and others, are separated from the base portion. The stand 4 is provided with reinforcing ribs to be resistant to vibration of the vehicle, and therefore the welding portion of the stand 4 occupies a large area. Consequently, bottom face of the base seat 3 occupies a large area. Still, there remains an insufficiency in the aspect of resistance to vibration due to the cantilever structure.

### Disclosure of the Invention

A fuel supply system for vehicle according to the invention includes:
a cup portion provided on a base seat, which closes an opening at the bottom of a fuel tank, in such a manner as to enlarge outwardly, have a smaller diameter than the opening and form a recess;
a plurality of support stays each fixed at a separate position from a wall erected from the mentioned cup portion;
a motor-driven fuel pump; and
a fuel filter for filtering a fuel discharged from the fuel pump; and
in which the fuel pump is combined with the fuel filter, and a suction port side of the fuel pump is positioned at the bottom of the mentioned cup portion and fixed to the plurality of support stays.

The cup portion is preferably arranged to be eccentric from a position conforming to an outer circumference of the opening of the fuel tank, and a feed terminal is provided on a plane of the eccentric space formed between the cup portion and the position conforming to the outer circumference.

The fuel filter is preferably enlarged extending into the space above the feed terminal.

### Brief Description of the Drawings

Fig. 1 is a sectional view of a fuel supply system for vehicle according to Embodiment 1 the invention.
Fig. 2 is a perspective view of a base seat portion of the fuel supply system for vehicle according to the invention.

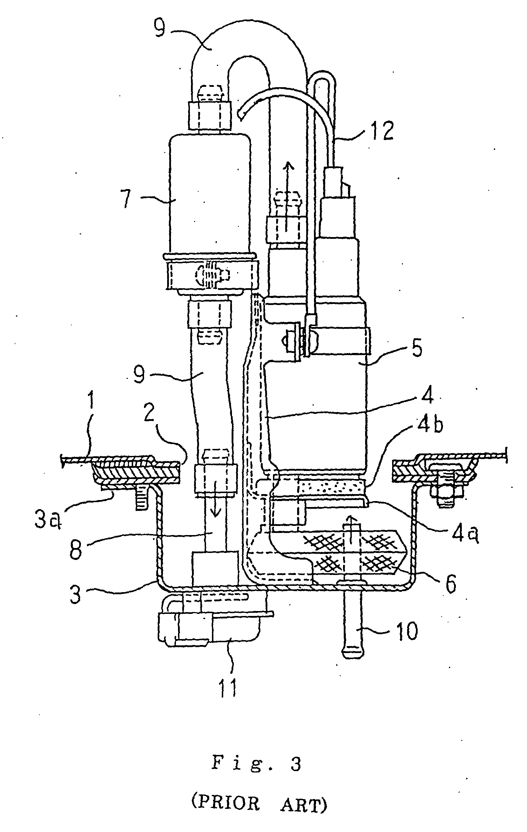

Fig. 3 is a sectional view of a fuel supply system for vehicle according to the prior art.

### Best Mode for Carrying Out the Invention

### Embodiment 1.

The invention is hereinafter described in more detail with reference to the accompanying drawings.

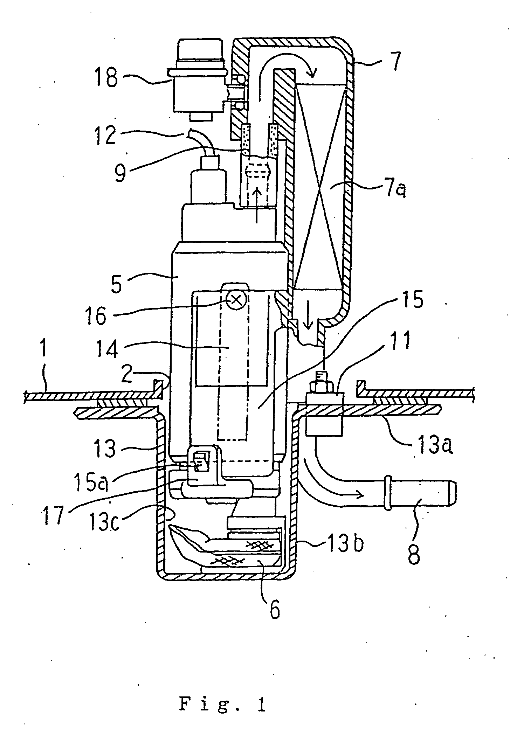

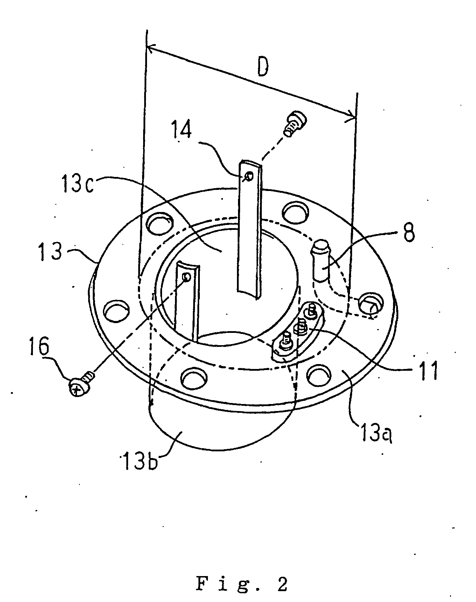

Fig. 1 is a sectional view of a fuel supply system for vehicle according to Embodiment 1 of the invention, and Fig. 2 is a perspective view of a base seat portion of the fuel supply system for vehicle according to the invention. In drawings, reference numeral 1, 2, 5 to 9, 11 and 12 designate the same parts as in the above-mentioned conventional supply system. Numeral 7a designates a filter element of a fuel filter 7. Numeral 13 designates a circular base seat provided with a flange 13a that closes around an opening 2 of the fuel tank 1. Numeral 13b designates a cup portion provided on the base seat 13 in such a manner as to enlarge outwardly with respect to the fuel tank 1. The cup portion 13b is a little larger than the outer circumference of the fuel pump 5 and narrower than the opening 2, and a recess portion of the cup portion 13b is provided eccentrically from the center of a diameter D conforming to the opening 2. A fuel supply pipe 8 and a power supply terminal 11 are disposed on a plane of a space eccentric between the position of the diameter D conforming to the opening 2 of the flange 13a and the cup portion 13b. The fuel pipe 8 and the power supply terminal 11 occupy a space adjacent to the flange 13a. On the other hand, an enlargement of the fuel filter 7, of which volume is required to be large, is formed extending into the space above the power supply terminal 11 and the fuel feed pipe 8 within the dimension of the diameter D of the opening 2.

Numeral 14 designates a support stay, and a plurality of support stays 14 are fixed and welded separately with one another onto a wall 13c that is erected from the bottom of the cup portion 13b of the base seat 13 to the flange 13a.

Numeral 15 designates a stay holder extending from the fuel filter 7, and in which each of the support stay 14 is combined with one another. Each stay holder 15 extends in such a manner as to enclose the peripheral of the fuel pomp 5, and is provided with an engaging protrusion 15a for snap-fit-engagement with a pump fixing member 17 described later. Numeral 16 designates a clump screw for fixing each stay holder 15 to the holding stay 14. Numeral 18 designates a pressure regulator, which is branched from the fuel filter 7 and regulates evenly a fuel pressure fed to the internal combustion. Excess fuel liquid left after the regulation of the fuel pressure by the pressure regulator 18 is returned to the fuel tank as it is. This structure makes it possible to omit the return pipe 10 employed in the mentioned prior art, and contributes to simplification and downsizing of the base seat 13.

Now, an assembling process of the fuel supply system for vehicle according to the invention is hereinafter described. Upper part of the fuel filter 7 is overhanging like a pent-roof, and a fuel inlet is provided downwardly on the overhanging portion. Outlet of the fuel pump 5 is connected to the fuel inlet through the rubber conduit 9. Thus, the fuel filter 7 is connected to fuel pump 5. And by fitting the pump fixing member 17 from the lower part of the fuel pump 5 into the engaging protrusion 15a in the form of snap-fit-engagement, the fuel filter 7 and fuel pump 5 are solidly fixed to each other with the elasticity of the conduit 9. The suction filter 6 is mounted on the suction port of the fuel pump 5. Then the suction filter 6 side of the fuel pump 5 is inserted in the cup portion 13b of the base seat 13, and the stay holder 15 is combined with the holding stays 14. At the same time, the outlet of the fuel filter 7 is connected to the fuel supply pipe 8 putting a seal member therebetween.

In this state, the stay holder 15 is fixed to the holding stays 14 with the clump screw 16, and this makes the fuel pump 5 and the fuel filter 7 securely fixed onto the base seat 13. Thereafter, setting of accessories such as pressure regulator 18 or fuel gage (not shown) and wiring are carried out. In this manner, fuel supply system for vehicle according to the invention is completed.

In addition, the operation for pressurizing the fuel liquid, removing dust therefrom and supplying the same to the internal combustion is the same as in the mentioned prior art, and further explanation is omitted.

### Industrial Applicability

In the fuel supply system for vehicle according to the invention, the support stays 14 are fixed and welded separately with one another onto the wall 13c that is erected from the bottom of the cup portion 13b of the base seat 13. On the plurality of support stays 14, the fuel pump 5 and the fuel filter 7 are firmly secured in the form of a both end fixed structure, whereby resistance to vibration is improved. Further, since the holding stays 14 are fixed onto the wall 13c, the mounting space for the holding stay 14 is downsized, and therefore, the section area of the mounting portion through the opening 2 is reduced.

Furthermore, the cup member 13b of the base'seat 13 is eccentrically provided with respect to the opening 2 of the fuel tank 1, the fuel supply pipe 8 and power supply terminal 11 are disposed in the electric space between the opening 2 and the flange 13a, and the enlarged portion of the fuel filter 7 is disposed on the upper space of the power supply terminal 11. As a result, the section radius of the entire fuel supply system for vehicle can be decreased, and consequently diameter of the opening of the fuel tank 1 can be reduced at the lower part.

## Claims

1. A fuel supply system for vehicle mounted onto an opening at a bottom of a fuel tank comprising:
a base seat for closing said opening;
a cup portion provided on said base seat in such a manner as to enlarge outwardly, have a smaller diameter than said opening and form a recess;
a plurality of support stays each fixed at a separate position from a wall erected from said cup portion;
a motor-driven fuel pump; and
a fuel filter for filtering a fuel discharged from said fuel pump;
**characterized in that** said fuel pump is combined with said fuel filter, and a suction port side of said fuel pump is positioned at the bottom of said cup portion and fixed to said support stays.

2. The fuel supply system for vehicle according to claim 1, **characterized in that** the cup portion is arranged to be eccentric from a position conforming to an outer circumference of the opening of the fuel tank, and a feed terminal is provided on a plane of the eccentric space formed between said cup portion and said position conforming to the outer circumference.

3. The fuel supply system for vehicle according to claim 2, **characterized in that** the fuel filter is enlarged extending into said space above the feed terminal.
